(19) Europäisches Patentamt
European Patent Office
Office européen des brevets

(11) **EP 1 659 270 B1**

(12) **EUROPEAN PATENT SPECIFICATION**

(45) Date of publication and mention
of the grant of the patent:
**22.08.2007 Bulletin 2007/34**

(51) Int Cl.:
*F01N 3/08* (2006.01)　　*F01N 3/20* (2006.01)
*F01N 3/36* (2006.01)　　*F02M 31/18* (2006.01)

(21) Application number: **05025179.2**

(22) Date of filing: **17.11.2005**

(54) **Exhaust purification system for internal combustion engine**

Abgasreinigungssystem für eine Brennkraftmaschine

Système de purification des gaz d'échappement pour un moteur à combustion interne

(84) Designated Contracting States:
**DE FR GB**

(30) Priority: **18.11.2004 JP 2004334366**

(43) Date of publication of application:
**24.05.2006 Bulletin 2006/21**

(73) Proprietor: **Toyota Jidosha Kabushiki Kaisha
Toyota-shi, Aichi-ken, 471-8571 (JP)**

(72) Inventors:
 • **Asanuma, Takamitsu,c/oToyota Jidosha K.K.
 Toyota-shi
 Aichi-ken, 471-8571 (JP)**
 • **Hirota, Shinya,c/oToyota Jidosha K.K.
 Toyota-shi
 Aichi-ken, 471-8571 (JP)**
 • **Nakano, Yasuaki,c/oToyota Jidosha K.K.
 Toyota-shi
 Aichi-ken, 471-8571 (JP)**
 • **Yoshida, Kohei,c/oToyota Jidosha K.K.
 Toyota-shi
 Aichi-ken, 471-8571 (JP)**

(74) Representative: **TBK-Patent
Bavariaring 4-6
80336 München (DE)**

(56) References cited:
 **EP-A- 1 258 453        US-B1- 6 370 872**

 • **PATENT ABSTRACTS OF JAPAN vol. 018, no. 512
 (M-1679), 27 September 1994 (1994-09-27) & JP
 06 173652 A (TOYOTA MOTOR CORP), 21 June
 1994 (1994-06-21)**

## Description

BACKGROUND OF THE INVENTION

1. Filed of the Invention

The present invention relates to an exhaust purification system of an internal combustion engine.

2. Description of the Related Art

In recent years, internal combustion engines (lean burn engines), designed to reduce fuel consumption by operating with the air-fuel ratio in a lean state, have been put into practical use. In this internal combustion engine, a storage and reducing type NOx catalyst is provided in the exhaust passage for fully purifying the nitrogen oxides (hereinafter referred to as "NOx") in exhaust gas.

In this description, the term "storage" is used as including the meanings of both "absorption" and "adsorption". Therefore, a "storage and reducing type NOx catalyst" includes both an "NOx storing agent" and an "NOx adsorbent". The former stores NOx in the form of nitrates etc., while the latter adsorbs it in the form of $NO_2$ etc. Further, regarding the term "release" from the NOx catalyst for the sulfur ingredient etc. as well, the term is intended to include the meaning of not only "release" corresponding to "absorption", but also "disassociation" corresponding to "adsorption".

Further, the fuel burned in combustion chambers of internal combustion engines and the lubrication oil used in the combustion chambers include a sulfur ingredient (S ingredient), so the exhaust gas includes sulfur oxides (below, referred to as "SOx"). For this reason, an SOx absorbent for trapping and absorbing this SOx, that is, an S trap agent, is provided in the exhaust passage upstream from the storage and reducing type NOx catalyst.

However, there is a limit to the amount of SOx which can be trapped by the upstream side SOx absorbent and, when the amount of trapped SOx exceeds a predetermined limit value thereof, the SOx passes through the SOx absorbent and flows into the storage and reducing type NOx catalyst. Due to this, the SOx is stored in the storage and reducing type NOx catalyst. It should be noted that the mechanism of SOx storage by the NOx storage agent is exactly the same as the case of the storage action of NOx. The SOx stored in the storage and reducing type NOx catalyst is not released by a temporary rich air-fuel ratio such as with NOx and, if SOx is gradually stored in the storage and reducing type NOx catalyst, the storage performance of the NOx of the storage and reducing type NOx catalyst gradually falls (this will be referred to below as "SOx poisoning" or "S poisoning").

To maintain the amount of SOx trappable in the SOx absorbent, the SOx absorbent is regenerated. The regeneration of the SOx absorbent is controlled by setting the air-fuel ratio to the stoichiometric or rich state and raising the SOx absorbent to a predetermined temperature. Due to this, the SOx is released from the SOx absorbent and the SOx storage agent is regenerated. However, in this case, the SOx released from the SOx absorbent flows into the downstream side storage and reducing type NOx catalyst as it is and the storage performance of the NOx of the storage and reducing type NOx catalyst similarly falls.

When the storage performance of the storage and reducing type NOx catalyst falls due to SOx in this way, the air-fuel ratio is set to the stoichiometric or rich state and the storage and reducing type NOx catalyst is raised to a predetermined temperature to release the SOx. However, when raising the temperature of the storage and reducing type NOx catalyst, the SOx absorbent is not directly raised in temperature and, even if SOx is released from the NOx catalyst, if the amount of SOx trappable by the SOx absorbent exceeds a predetermined value, in the end, the SOx is stored in the storage and reducing type NOx catalyst.

To avoid this problem, Japanese Unexamined Patent Publication (A) No. 2000-145436 discloses an exhaust purification system of an internal combustion engine designed to provide a bypass passage for bypassing the storage and reducing type NOx catalyst from the exhaust passage between the SOx absorbent and storage and reducing type NOx catalyst and arrange a changeover valve at the branch part of the bypass passage for directing the flow of the exhaust gas to one of the storage and reducing type NOx catalyst and bypass passage. In this exhaust purification system, when releasing NOx from the storage and reducing type NOx catalyst, the changeover valve is held at the position where the exhaust gas flows into the storage and reducing type NOx catalyst, while when releasing SOx from the SOx absorbent, the changeover valve is held at the position where the exhaust gas flows into the bypass passage.

However, in the exhaust purification system disclosed in Japanese Unexamined Patent Publication (A) No. 2000-145436, since there is, naturally, a predetermined interval required for operation of the changeover valve, even when releasing SOx from the SOx absorbent, part of the SOx is stored in the storage and reducing type NOx catalyst without passing through the bypass passage. Therefore, it is difficult to completely prevent a drop in the storage performance of the storage and reducing type NOx catalyst.

Further, the exhaust purification system disclosed in Japanese Unexamined Patent Publication (A) No. 2000-145436 requires a bypass passage and changeover valve, so the structure of the exhaust purification system becomes complicated.

Document JP-A-06173652 discloses a casing housing a SOx absorbent and a NOx absorbent connected to an exhaust gas pipe. A spark plug and a fuel injection valve are controlled by an electronic control unit. The NOx absorbent absorbs NOx when an air-fuel ratio of inflowing exhaust gas is lean and releases the absorbed NOx when the oxygen concentration is lowered. The SOx absorbent absorbs SOx when an air-fuel ratio of exhaust gas is lean and protects the NOx absorbent arranged downstream of the SOx and releases the SOx when the oxygen concentration is lowered. When the air-fuel ratio of the exhaust gas becomes rich, the SOx and NOx are released respectively from the SOx absorbent. In this way the NOx absorbent can be protected from sulphur.

The object underlying the invention is to provide an exhaust gas purification system of an internal combustion engine which has a clear and simple configuration but nevertheless effectively avoids S-poisoning of a storage and reducing type NOx catalyst.

SUMMARY OF THE INVENTION

This object is solved by the features of claim 1.

According to the invention, there is provided an exhaust purification system of an internal combustion engine provided with a storage and reducing type NOx catalyst provided in an exhaust passage of the internal combustion engine, an SOx absorbent provided at an upstream side of the NOx catalyst and absorbing and trapping the S ingredient, a reducing agent feeding means for feeding a reducing agent at an upstream side of the SOx absorbent, and an S trap rate detecting means for detecting an S trap rate of the SOx absorbent, wherein when the S trap rate detected by the S trap rate detecting means is smaller than a predetermined value, the reducing agent is fed by the reducing agent feeding means, so that the amount of temperature change of the SOx absorbent before and after the feed of the reducing agent by the reducing agent feeding means is made to become smaller than the amount of temperature change of the NOx catalyst before and after the feeding of the reducing agent and the temperature of the SOx absorbent after the feeding of the reducing agent is made to become higher than the S trap rate increasing temperature for raising the S trap rate of the SOx absorbent and is made to become lower than the S ingredient disassociation temperature for disassociation of the S ingredient from the SOx absorbent, thereby making the NOx catalyst high in temperature and thereby making the air-fuel ratio rich so that the SOx stored in the NOx catalyst is released.

That is, in the first aspect of the invention, the reducing agent, that is, the hydrocarbon (HC), is relatively low in reactivity, so the reducing agent reaching the SOx absorbent does not react that much on the SOx absorbent. For this reason, the temperature of the upstream side SOx absorbent only rises between the S trap rate increasing temperature and the S ingredient disassociation temperature higher than the S trap rate increasing temperature, whereby the trapping efficiency of the SOx absorbent can be improved and the disassociation of the S ingredient from the SOx absorbent can be suppressed. Further, the reducing agent reaches the downstream side storage and reducing type NOx catalyst without reacting much in the SOx absorbent and mainly raises the temperature of the NOx catalyst. Due to this, the amount of temperature change of the storage and reducing type NOx catalyst becomes larger than the amount of temperature change of the SOx absorbent. As the reducing agent is fed, the air-fuel ratio shifts to the rich side. Therefore, the SOx stored in the storage and reducing type NOx catalyst can be simultaneously released. In this way, in the first aspect of the invention, when releasing SOx from the downstream side storage and reducing type NOx catalyst, SOx is not released from the upstream side SOx absorbent, so that SOx can be released from the storage and reducing type NOx catalyst without the storage and reducing type NOx catalyst being poisoned by S. Therefore, in the first aspect of the invention, without providing the bypass passage and changeover valve used in the prior art, it is possible to suppress disassociation of the S ingredient of the upstream side SOx absorbent and release the S ingredient from the downstream side storage and reducing type NOx catalyst.

According to the invention, the reducing agent feeding means may be designed to feed heavy fuel and light fuel, the reducing agent feeding means can change the feed ratio of the heavy fuel and the light fuel and, when releasing SOx from the NOx catalyst, the feed ratio of the heavy fuel is increased to make the temperature of the SOx absorbent lower than the S ingredient disassociation temperature.

The heavy fuel supplied from the reducing agent feeding means and reaching the SOx absorbent requires a relatively long time for reaction, so the temperature of the upstream side SOx absorbent can be suppressed to not more than the S ingredient disassociation temperature. Note that the heavy fuel and light fuel may be provided separately from the usual fuel used in an internal combustion engine. Further, it is also possible to form heavy fuel and light fuel by fractional distillation from ordinary fuel.

According to a further aspect of the invention the reducing agent feeding means may be designed to feed heavy fuel and light fuel wherein the reducing agent feeding means changes the feed ratio of the heavy fuel and the light fuel, and, when releasing SOx from the NOx catalyst, the feed ratio of the light fuel is increased to make the temperature of the SOx absorbent higher than the S trap rate increasing temperature.

The light fuel fed from the reducing agent feeding means and reaching the SOx absorbent requires only a relatively short time for generating heat, so it becomes possible to raise the temperature of the upstream side SOx absorbent higher than the S trap rate increasing temperature relatively easily.

According to the invention the reducing agent feeding means may be designed to feed the reducing agent by post injection and to feed reducing agent from the reducing agent injection nozzle provided in the exhaust passage and wherein the fuel fed from the reducing agent injection nozzle is fuel heavier than the fuel injected by the post injection.

By feeding heavy fuel from the reducing agent injection nozzle and feeding fuel lighter than the heavy fuel by post injection, it is possible to easily change the feed ratio of the heavy fuel and the lighter light fuel.

According to the invention the reducing agent feeding means may be a reducing agent injection nozzle provided in the exhaust passage and, when releasing SOx from the NOx catalyst, at least one action of increasing the amount of fuel injection per injection by the reducing agent injection nozzle and shortening the injection interval by the reducing agent injection nozzle is performed.

Accordingly it is possible to achieve the release of SOx from the NOx catalyst by a relatively simple configuration.

According to these aspects of the present invention, the common effect can be exhibited that, without providing the bypass passage and changeover valve used in the prior art, the disassociation of the S ingredient of the upstream side SOx absorbent can be suppressed and the S ingredient can be released from the downstream side storage and reducing type NOx catalyst.

Further, according to the invention, the effect can be exhibited that temperature of the upstream side SOx absorbent can be suppressed to not more than the S ingredient disassociation temperature.

Further, according to the invention, the effect can be exhibited that the temperature of the upstream side SOx absorbent can be raised relatively easily to the S trap rate increasing temperature or more.

Further, according to the invention, the effect can be exhibited that the feed ratio of the heavy fuel and the lighter light fuel can be easily changed.

Further, according to the invention, the effect can be exhibited that the release of SOx from the NOx catalyst can be realized by a relatively simple configuration.

BRIEF DESCRIPTION OF THE DRAWINGS

These and other objects, features and advantages of the present invention will be more apparent in light of the detailed description of exemplary embodiments thereof as illustrated by the drawings.

FIG. 1 is an overview of an internal combustion engine.
FIG. 2 is a view of a map of the basic fuel injection time TP.
FIG. 3 is a graph showing schematically the concentrations of unburned HC, CO, and oxygen in the exhaust emitted from an engine.
FIG. 4 is a view for explaining the action of absorbing and releasing the NOx.
FIG. 5 is a flow chart of an operation program of an exhaust purification system according to the present invention.
FIG. 6A is a view of the relationship between the amount of sulfur ingredient trapped by the SOx absorbent and time.
FIG. 6B is another view of the relationship between the amount of sulfur ingredient trapped by the SOx absorbent and time.
FIG. 7 is a view of the relationship between the NOx purification rate in an NOx catalyst and the amount of SOx absorbed in an NOx catalyst.
FIG. 8 is a view of the relationship between the temperature of the SOx absorbent and NOx catalyst and time.
FIG. 9A is a view of the state of supply of HC by a reducing agent feed nozzle.
FIG. 9B is another view of the state of supply of HC by the reducing agent feed nozzle.
FIG. 9C is still another view of the state of supply of HC by the reducing agent feed nozzle.
FIG. 10 is a view for explaining the injection timing.
FIG. 11A is a time chart of the amount of HC and air-fuel ratio in the prior art.
FIG. 11B is a time chart of the amount of HC and air-fuel ratio in the present invention.
FIG. 12A is another time chart of the amount of HC and air-fuel ratio in the prior art.
FIG. 12B is another time chart of the amount of HC and air-fuel ratio in the present invention.
FIG. 13A is a view of the state of atomization of a reducing agent feed nozzle in the prior art.
FIG. 13B is a view of the state of atomization of a reducing agent feed nozzle in the present invention.

DESCRIPTION OF THE PREFERRED EMBODIMENTS

Below, embodiments of the present invention will be explained with reference to the attached drawings. In the drawings, the same members are assigned the same reference numerals. To facilitate understanding, these drawings are suitably changed in scale.

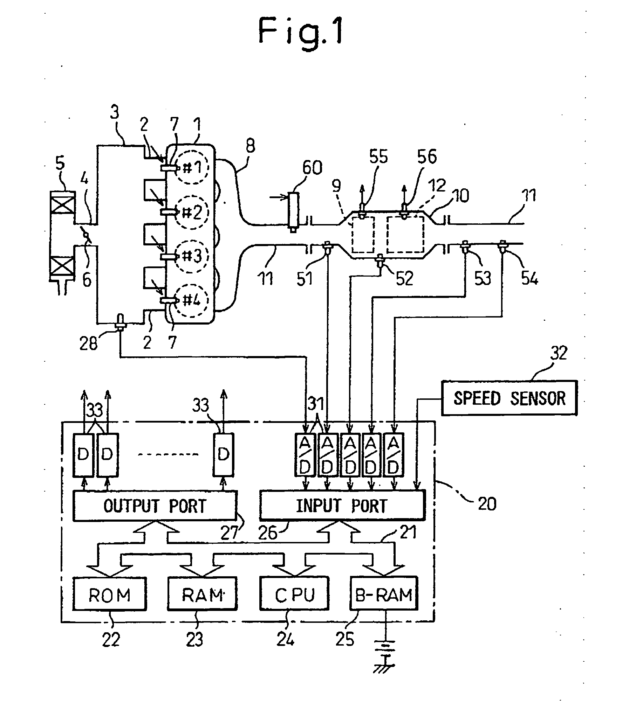

Referring to FIG. 1, the engine body 1 is, for example, provided with four cylinders. Each cylinder is connected through a corresponding intake tube 2 to a surge tank 3, while the surge tank 3 is connected through an intake duct 4 to an air cleaner 5. The intake duct 4 has a throttle valve 6 arranged inside it. Further, each cylinder is provided with a fuel injector 7 for directly injecting fuel into its combustion chamber. On the other hand, each cylinder is connected through a common exhaust manifold 8 to a casing 10. The casing 10 has an SOx absorbent 9 and a storage and reducing type NOx catalyst (below, called the "NOx catalyst") 12 arranged inside it. As illustrated, the SOx absorbent 9 is arranged at the upstream side of the NOx catalyst 12.

An electronic control unit 20 is comprised of a digital computer provided with a ROM (read only memory) 22, a RAM (random access memory) 23, a CPU (microprocessor) 24, a B-RAM (backup RAM) 25 to which power is constantly supplied, an input port 26, and an output port 27 connected with each other by a bidirectional bus 21. The surge tank 3 is provided with a pressure sensor 28 generating an output voltage proportional to the absolute pressure in the surge tank 3. Upstream of the SOx absorbent 9 is provided an SOx sensor 51 for generating an output voltage proportional to the amount of SOx in the exhaust. Further, between the SOx absorbent 9 and NOx catalyst 12 is provided an SOx sensor 52 for generating an output voltage proportional to the amount of SOx in the exhaust at the output of the SOx absorbent 9. Further, downstream of the casing 10 are provided a NOx sensor 53 for generating an output voltage proportional to the amount of NOx in the exhaust and an air-fuel ratio sensor 54 for detecting the air-fuel ratio. Further, temperature sensors 55, 56 are provided for detecting the temperatures of the SOx absorbent 9 and NOx catalyst 12 at the casing 10. Note that the absolute pressure in the surge tank 3 detected by the pressure sensor 28 expresses the engine load.

Further, at the upstream side of the casing 10, in accordance with need, a reducing agent feed nozzle 60 for adding a reducing agent, for example, a hydrocarbon (hereinafter suitably called "HC") into the exhaust passage is provided. Note that this reducing agent feed nozzle 60 may be arranged anywhere between the casing 10 and the exhaust manifold 8. Note that the reducing agent used in the present invention may be any one which generates a hydrocarbon, carbon monoxide, or other reducing ingredient in an exhaust gas. To avoid complexity at the time of storage, supply, etc., it is preferable to use the fuel of the internal combustion engine, that is, gas oil, as the reducing agent. Therefore, unless otherwise specified, the reducing agent feed nozzle 60 feeds the fuel filled into the fuel tank (not shown in FIG. 1), for the fuel injectors 7, as the reducing agent.

The output voltages of these sensors 28, 51 to 56 are input through the corresponding AD converters 31 to the input port 26. Further, the input port 26 has a speed sensor 32 connected to it for generating an output pulse expressing the engine speed N. On the other hand, the output port 27 is connected through corresponding drive circuits 33 to the fuel injectors 7, reducing agent feed nozzle 60, and step motor (not shown) connected to the throttle valve 6.

In the present embodiment, the fuel injection time TAU(i) of the i-th cylinder is calculated based on the following equation:

$$TAU(i)=TP \cdot (1+K(i))$$

Here, TP shows the basic fuel injection time, while K(i) shows the correction coefficient of the i-th cylinder.

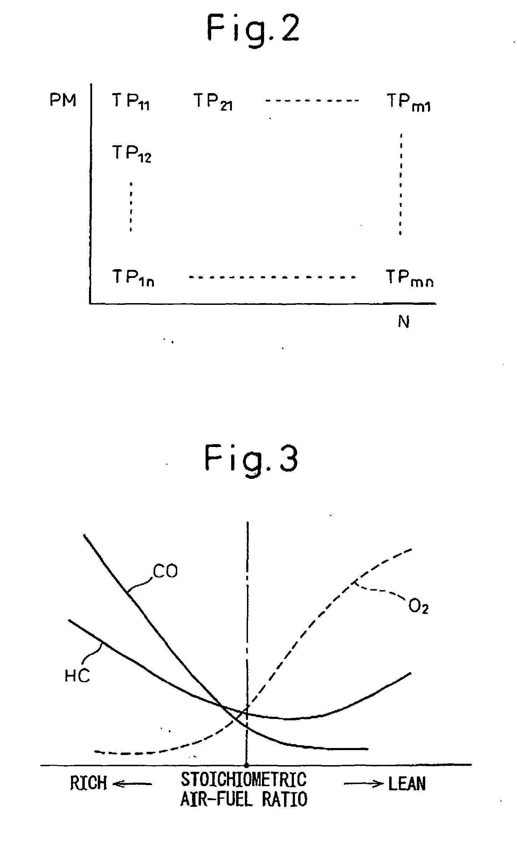

The basic fuel injection time TP is the fuel injection time required to make the air-fuel ratio of the air-fuel mixture burned in each cylinder the stoichiometric air-fuel ratio and is found in advance by experiment. This basic fuel injection time TP is stored as a function of the absolute pressure PM in the surge tank 3 and engine speed N in the form of the map shown in FIG. 2 in the ROM 22. The correction coefficient K(i) is a coefficient for controlling the air-fuel ratio of the air-fuel mixture burned in the i-th cylinder where when K(i)=0, the air-fuel ratio of the air-fuel mixture burned in the i-th cylinder becomes the stoichiometric air-fuel ratio. As opposed to this, when K(i)<0, the air-fuel ratio of the air-fuel mixture burned in the i-th cylinder becomes larger than the stoichiometric air-fuel ratio, that is, becomes lean, while when K(i)>0, the air-fuel ratio of the air-fuel mixture burned in the i-th cylinder becomes smaller than the stoichiometric air-fuel ratio, that is, rich.

In the present embodiment, at the time of normal operation, in all cylinders, the correction coefficient K(i) is maintained at -KL (KL>0). Therefore, the air-fuel ratio of the air-fuel mixture burned in all cylinders is maintained lean. FIG. 3 schematically shows the concentrations of representative ingredients in the exhaust emitted from the cylinders. As will be understood from FIG. 3, the amounts of unburned HC and CO in the exhaust emitted from the cylinders increase the richness the air-fuel ratio of the air-fuel mixture burned in the cylinders, while the amount of the oxygen $O_2$ in the exhaust emitted from the cylinders increases the leaner the air-fuel ratio of the air-fuel mixture burned in the cylinders.

The NOx catalyst 12 is for example comprised of alumina as a carrier on which for example at least one element selected from an alkali metal such as potassium K, sodium Na, lithium Li, and cesium Cs, an alkali earth such as barium Ba and calcium Ca, and a rare earth such as lanthanum La and yttrium Y and a precious metal such as platinum Pt, palladium Pd, rhodium Rh, and iridium Ir are carried. Note that the more preferable NOx catalyst 12 will be explained later. If the ratio of the total amount of air to the total amount of fuel and the total amount of reducing agent supplied into the exhaust passage upstream from a certain position in the exhaust passage, the combustion chambers, and the intake passage is called the air-fuel ratio of the exhaust passing through that position, this NOx catalyst 12 absorbs NOx when the air-fuel ratio of the inflowing exhaust is lean, while it releases the absorbed NOx when the oxygen concentration in the inflowing exhaust falls, that is, it performs an NOx absorption and release action. Note that, when the exhaust passage upstream of the NOx catalyst 12 is not supplied with fuel or air, the air-fuel ratio of the inflowing exhaust matches the ratio of the total amount of air to the total amount of fuel fed to the cylinders.

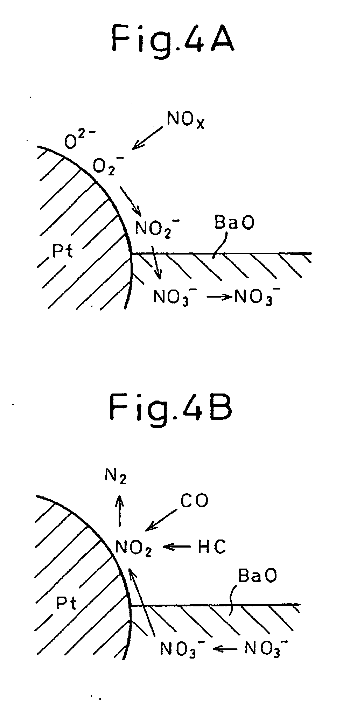

When the above NOx catalyst 12 is inside the engine exhaust passage, this NOx catalyst 12 actually performs the NOx absorption and release action, but the detailed mechanism of this absorption and release action is not clear in some parts. However, this absorption and release action is believed to be performed by the mechanism such as shown in FIG. 4A and FIG. 4B. Next, this mechanism will be explained with reference to the example of a case of a carrier carrying platinum Pt and barium Ba, but a similar mechanism is realized even if using another precious metal, alkali metal, alkali earth, or rare earth.

That is, if the inflowing exhaust becomes considerably lean, the concentration of oxygen in the inflowing exhaust greatly increases. As shown in FIG. 4A, the oxygen $O_2$ deposits on the surface of the platinum Pt in the form of $O_2^-$ or $O^{2-}$. On the other hand, the NO in the inflowing exhaust reacts with the $O_2^-$ or $O^{2-}$ on the surface of the platinum Pt to become $NO_2$ ($2NO+O_2 \rightarrow 2NO_2$). Next, part of the generated $NO_2$ is further oxidized on the platinum Pt, absorbed in the absorbent, bonds with the barium oxide BaO, and, as shown in FIG. 4A, diffuses into the absorbent in the form of nitrate ions $NO_3^-$. In this way, NOx is absorbed in the NOx catalyst 12.

So long as the concentration of oxygen in the inflowing exhaust is high, $NO_2$ is produced on the surface of the platinum Pt. As long as the NOx absorption ability of the absorbent is not saturated, the $NO_2$ is absorbed in the absorbent and nitrate ions $NO_3^-$ are produced. As opposed to this, if the concentration of oxygen in the inflowing exhaust falls and the amount of production of $NO_2$ falls, the reaction proceeds in the reverse direction ($NO_3^- \rightarrow NO_2$), therefore the nitrate ions $NO_3^-$ in the absorbent are released from the absorbent in the form of $NO_2$. That is, if the concentration of oxygen in the inflowing exhaust falls, the NOx catalyst 12 releases NOx. If the degree of leanness of the inflowing exhaust is low, the concentration of oxygen in the inflowing exhaust falls and, therefore, if the degree of leanness of the inflowing exhaust is low, the NOx catalyst 12 releases the NOx.

On the other hand, if the air-fuel ratio of the exhaust flowing into the NOx catalyst 12 is rich at this time, as shown in FIG. 3, this exhaust will contain large amounts of HC and CO. These HC and CO will react with the oxygen $O_2^-$ or $O^{2-}$ on the platinum Pt and be oxidized. Further, if the air-fuel ratio of the inflowing exhaust is rich, the concentration of oxygen in the inflowing exhaust will sharply fall, so the absorbent will release $NO_2$. This $NO_2$, as shown in FIG. 4B, reacts with the HC and CO to be reduced. When there is no longer any $NO_2$ present on the surface of the platinum Pt in this way, the absorbent will successively release $NO_2$. Therefore, if the air-fuel ratio of the inflowing exhaust is rich, the NOx catalyst 12 will release NOx in a short period.

As explained above, at the time of normal operation, the air-fuel ratio of the air-fuel mixture burned in all cylinders is maintained lean. Therefore, at the time of normal operation, the NOx in the exhaust emitted from the cylinders is led to the NOx catalyst 12 and is absorbed at the NOx catalyst 12. However, there are limits to the NOx absorption ability of a NOx catalyst 12, so before the NOx absorption ability of the NOx catalyst 12 is saturated, it is necessary to make the NOx catalyst 12 release the NOx. Accordingly, in the present embodiment, the amount of absorbed NOx of the NOx catalyst 12 is found. When this amount of absorbed NOx becomes greater than a predetermined setting, the air-fuel ratio of the air-fuel mixture burned in all of the cylinders is made temporarily rich to make the NOx catalyst 12 release and reduce the NOx.

That is, when the NOx catalyst 12 releases NOx, the correction coefficient K(i) of all cylinders is temporarily switched to KN(>0). However, the fuel and the engine lubrication oil contains sulfur ingredient, so the exhaust flowing into the NOx catalyst 12 contains a sulfur ingredient, for example, SOx. The NOx catalyst 12 absorbs not only NOx, but also SOx. The mechanism of absorption of SOx in this NOx catalyst 12 may be considered to be the same as the mechanism of absorption of NOx.

That is, to explain this, using as an example the case of carrying platinum Pt and barium Ba on a carrier in the same way as when explaining the mechanism of absorption of NOx, as explained above, when the air-fuel ratio of the inflowing exhaust is lean, the oxygen $O_2$ deposits on the surface of the platinum Pt in the form of $O_2^-$ or $O^{2-}$ and the SOx, for example, the $SO_2$, in the inflowing exhaust reacts with the $O_2^-$ or $O^{2-}$ on the surface of the platinum Pt to become $SO_3$. Next, the generated $SO_3$ is further oxidized on the platinum Pt, is absorbed in the absorbent, bonds with the barium oxide BaO, and is diffused in the absorbent in the form of sulfate ions $SO_4^{2-}$. Next, the sulfate ions $SO_4^{2-}$ bond with the barium ions $Ba^{2+}$ to form a sulfate, $BaSO_4$.

However, this $BaSO_4$ is hard to break down. Even if the air-fuel ratio of the inflowing exhaust is made rich, the $BaSO_4$ is not broken down and remains as it is. Therefore, inside the NOx catalyst 12, the $BaSO_4$ increases along with the elapse of time. Therefore, along with the elapse of time, the amount of NOx which the NOx catalyst 12 can absorb falls.

Therefore, in the present embodiment, SOx is prevented from flowing into the NOx catalyst 12 by arranging the SOx absorbent 9 in the exhaust passage upstream of the NOx catalyst 12. This SOx absorbent 9 absorbs the SOx when the air-fuel ratio of the inflowing exhaust is lean. When the temperature of the SOx absorbent 9 is higher than the SOx release temperature, if the oxygen concentration in the inflowing exhaust drops, the absorbed SOx is released.

In the above way, at the time of normal operation, the air-fuel ratio of the air-fuel mixture burned in all cylinders is lean, so the SOx exhausted from the cylinders is absorbed by the SOx absorbent 9, and the NOx catalyst 12 absorbs only NOx. However, there are also limits to the SOx absorption ability of the SOx absorbent 9. Before the SOx absorption ability of the SOx absorbent 9 becomes saturated, it is necessary to make the SOx absorbent 9 release the SOx. Therefore, in the present embodiment, the SOx absorption ability of the SOx absorbent 9, that is, the S trap rate, is found. When this S trap rate becomes larger than a predetermined value, the temperature of the SOx absorbent 9 is temporarily made higher than the SOx release temperature and the air-fuel ratio of the exhaust flowing into the SOx absorbent 9 is made temporarily rich to make the SOx absorbent 9 release the SOx. Note that when the SOx absorbent 9 should be made to release the SOx, the air-fuel ratio of the exhaust flowing into the SOx absorbent 9 may also be made the stoichiometric air-fuel ratio. In this case, the amount of SOx released from the SOx absorbent 9 per unit time becomes smaller.

However, if the exhaust flowing into the SOx absorbent 9 simultaneously contains a large amount of oxygen and a large amount of HC, the oxygen and HC react at the SOx absorbent 9, so the heat of the reaction can be used to heat the SOx absorbent 9. In this case, if the air-fuel ratio of the exhaust flowing into the SOx absorbent 9 is just slightly richer than the stoichiometric air-fuel ratio, it is possible to effectively utilize the HC for the action of heating the SOx absorbent 9 and the action of releasing the SOx. On the other hand, as shown in FIG. 3, if the air-fuel ratio of the air-fuel mixture burned in the cylinders is rich, the exhaust contains a large amount of HC, while if making the air-fuelratio lean, the exhaust contains a large amount of oxygen.

When the air-fuel ratio of the exhaust flowing into the SOx absorbent 9 is rich, to enable the SOx absorbent 9 to easily release SOx, it is necessary that absorbed SOx be present in the absorbent in the form of sulfate ions $SO_4^{2-}$ or that even if $BaSO_4$ is produced, that $BaSO_4$ is present, in the absorbent, in a non-stable state. As an SOx absorbent 9 enabling this, an absorbent comprised of a carrier made of alumina on which at least one element selected from a transition metal such as copper Cu, iron Fe, manganese Mn, and nickel Ni, sodium Na, titanium Ti, and lithium Li may be used. Alternatively, there is an idea that, to enable an SOx absorbent 9 to reliably absorb SOx, it is sufficient to raise the alkalinity of the SOx absorbent 9 higher than that of an NOx catalyst 12 and hold SOx in the SOx absorbent 9 in the form of relatively stable sulfate. As an SOx absorbent enabling this, for example, it is possible to use an absorbent comprised of a carrier made of alumina on which for example at least one element selected from an alkali metal such as potassium K, sodium Na, lithium Li, and cesium Cs and an alkali earth such as calcium Ca and a precious metal such as platinum Pt, palladium Pd, rhodium Rh, and iridium Ir may be used.

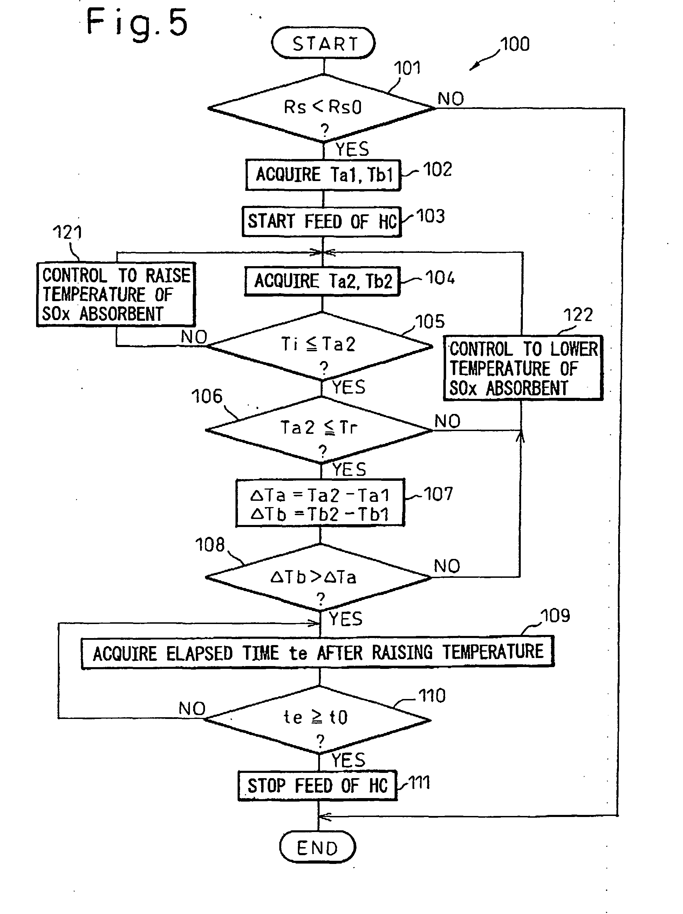

FIG. 5 is a flow chart showing the operation program of an exhaust purification system according to the present invention. This operation program 100 is based on the above. Below, the operation of the exhaust purification system of the present invention will be explained while referring to the operation program 100. Note that, this operation program 100 is built into the ROM 22 or RAM 23 of the electronic control unit 20 in advance.

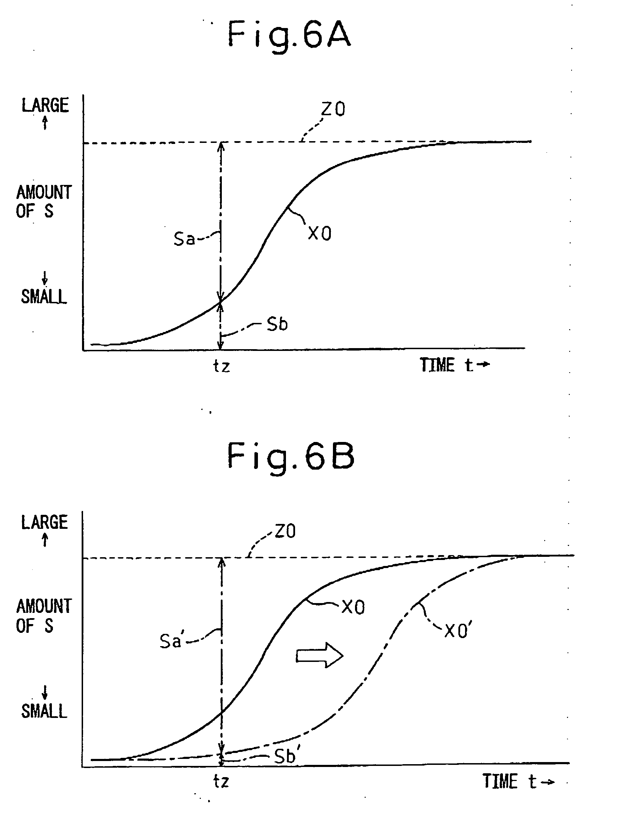

At step 101, it is judged if the SOx absorption ability of the SOx absorbent 9, that is, the S trap rate Rs, is larger than a predetermined value Rs0. FIG. 6A is a view showing the relationship between the amount of trapping of the sulfur ingredient in the SOx absorbent 9 and time. In FIG. 6A, the ordinate shows the amount of the sulfur ingredient in the exhaust gas absorbed by the SOx absorbent 9, while the abscissa indicates the time. In FIG. 6A, for example, the part Sa above the solid line X0 at the time tz is the amount of the sulfur ingredient absorbed in the SOx absorbent 9, while the part Sb below the solid line X0 is the amount of the sulfur ingredient exhausted downstream from the SOx absorbent 9. The S trap rate Rs in the present invention is expressed using Sa and Sb for example as Rs=Sa/(Sa+Sb). Note that, the broken line Z0 in FIG. 6A shows the total amount of the sulfur ingredient flowing into the SOx absorbent 9. The relation Z0=Sa+Sb stands between the total amount Z0 of the sulfur ingredient and Sa, Sb. As will be understood from FIG. 6A, the amount Sa of the sulfur ingredient trapped by the SOx absorbent 9 becomes smaller along with the elapse of time and finally approaches zero. For this reason, the S trap rate Rs also finally approaches zero.

The amounts of SOx obtained from the SOx sensors 51, 52 show Sa+Sb (=Z0), Sa, respectively, so at step 101, the S trap rate Rs is calculated from the amounts of SOx and compared with a predetermined value Rs0 of this S trap rate Rs. Note that the predetermined value of the S trap rate Rs0 is a value predetermined by experiments etc. and is built into the ROM 22 or RAM 23 in advance as a function of the engine speed N and absolute pressure PM (engine load) in the form of a map. Further, when the S trap rate Rs is smaller than a predetermined value, the routine proceeds to step 102. On the other hand, when the S trap rate Rs is not smaller than the predetermined value, there is no need to perform the later explained steps, so the processing is ended.

Note that, at step 101, the S trap rate Rs is calculated and is compared with the predetermined value Rs0, but it is not necessarily required to calculate the S trap rate Rs. It is also possible to use a later explained other judgment method to judge whether the S trap rate of the SOx absorbent 9 has fallen.

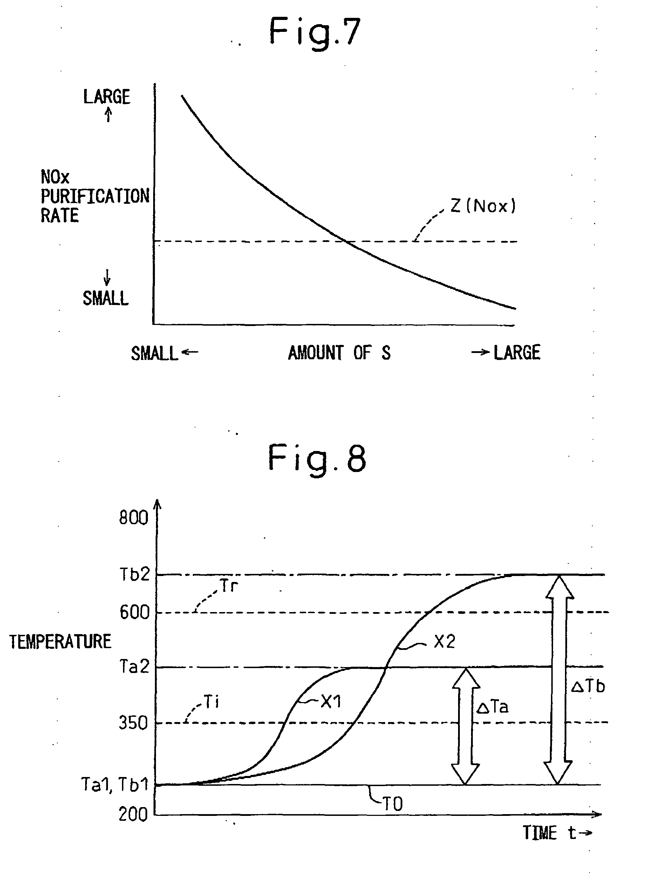

For example, it is also possible to use the amount of NOx from the NOx sensor 53 provided downstream of the NOx catalyst 12 to find the NOx purification rate at the NOx catalyst 12. FIG. 7 is a view showing the relationship between the NOx purification rate at the NOx catalyst 12 and the amount of SOx absorbed at the NOx catalyst 12. The NOx catalyst 12 is arranged downstream of the SOx absorbent 9. When the S trap rate Rs of the SOx absorbent 9 falls, the SOx which could not be trapped at the SOx absorbent 9 is absorbed in the NOx catalyst 12. If the amount of SOx stored at the NOx catalyst 12 increases, the NOx purification rate of the NOx catalyst 12 naturally falls. Therefore, by judging whether the NOx purification rate of the downstream side NOx catalyst 12 is lower than a certain predetermined value, for example, the illustrated Z(NOx), it is possible to indirectly judge whether the S trap rate Rs of the upstream side SOx absorbent 9 has fallen.

Further, it is also possible to use the air-fuel ratio from the air-fuel ratio sensor 54 provided downstream of the NOx catalyst 12 to indirectly judge the S trap rate Rs of the SOx absorbent 9. In this case, when the air-fuel ratio of the exhaust gas upstream of the casing 10 shifts from lean to rich, the air-fuel ratio detected by the air-fuel ratio sensor 54 provided downstream of the NOx catalyst 12 shifts from lean to rich. Due to this, the NOx which had been absorbed at the NOx catalyst 12 is reduced and purified. However, at this time, the HC in the exhaust gas is consumed, so it is judged that the air-fuel ratio of the exhaust gas downstream of the NOx catalyst 12 has changed from lean to the stoichiometric state. Further, if the NOx which had been absorbed in the NOx catalyst 12 is completely reduced and purified, the air-fuel ratio changes from the stoichiometric to rich state. That is, the longer the time the air-fuel ratio downstream of the NOx catalyst 12 is in the stoichiometric state, the lower the NOx purification rate of the NOx catalyst 12 becomes. For this reason, when the air-fuel ratio of the exhaust gas upstream of the casing 10 shifts from lean to rich, by judging if the time when the stoichiometric state of the air-fuel ratio of the exhaust gas downstream of the casing 10 is longer than a predetermined time, it is possible to indirectly judge whether the S trap rate Rs of the upstream side SOx absorbent 9 has fallen. Naturally, it is also possible to judge the drop in the S trap rate Rs by still another method, for example, detecting the amount of absorbed SOx absorbed at the SOx absorbent 9.

Next, at step 102 of the operation program 100, the temperature sensor 51 acquires the temperature Tal of the SOx absorbent 9 and similarly the SOx sensor 52 acquires the temperature Tb1 of the NOx catalyst 12.

FIG. 8 is a view of the relationship between the temperatures of the SOx absorbent and NOx catalyst and time. In FIG. 8, the ordinate indicates the temperatures of the SOx absorbent 9 and NOx catalyst 12, while the abscissa indicates the time t. Further, the solid line X1 shown in FIG. 8 shows the change of the temperature of the SOx absorbent 9, while the solid line X2 shows the change of the temperature of the NOx catalyst 12. Further, the broken line Ti shown in FIG. 8 shows the S trap rate increasing temperature for raising S trap rate. Further, the broken line Tr shows an S ingredient disassociation temperature higher than the S trap rate increasing temperature and at which the S ingredient disassociates from the SOx absorbent. The S trap rate increasing temperature Ti and S ingredient disassociation temperature Tr are values determined in accordance with the type of the SOx absorbent 9. In this embodiment, the S trap rate increasing temperature Ti is about 350°C, preferably 400°C. Further, the S ingredient disassociation temperature Tr is about 600°C.

In FIG. 8, the temperature Ta1 of the SOx absorbent 9 and the temperature Tb1 of the NOx catalyst 12 at step 102 are generally equal at the temperature T0 of the exhaust gas flowing into the casing 10. Therefore, the temperature Ta1 and the temperature Tb2 sometimes can become equal to each other.

Next, the routine proceeds to step 103, where the reducing agent feed nozzle 60 shown in FIG. 1 or the later explained post injection etc. are used to feed HC to the exhaust pipe 11. By the HC reaching the SOx absorbent 9, the temperature of the SOx absorbent 9 is raised. Next, the routine proceeds to step 104, where the temperature Ta2 of the SOx absorbent 9 and the temperature Tb2 of the NOx catalyst 12 after the feeding of the reducing agent are obtained.

Next, at step 105, it is judged if the temperature Ta2 of the SOx absorbent 9 is the S trap rate increasing temperature Ti or more. If the temperature Ta2 of the SOx absorbent 9 is the S trap rate increasing temperature Ti or more, the routine proceeds to step 106. At step 106, it is judged if the temperature Ta2 of the SOx absorbent 9 is the S ingredient disassociation temperature Tr or lower. If the temperature Ta2 of the SOx absorbent 9 is the S ingredient disassociation temperature Tr or lower, the routine proceeds to step 107. On the other hand, if at step 105 the temperature Ta2 of the SOx absorbent 9 is not the S trap rate increasing temperature Ti or higher, the routine proceeds to step 121, where the later explained temperature raising control is performed for the SOx absorbent 9. Further, when at step 106 the temperature Ta2 of the SOx absorbent 9 is not the S ingredient disassociation temperature Tr or less, the routine proceeds to step 122, wherein the later explained temperature lowering control is performed for the SOx absorbent 9.

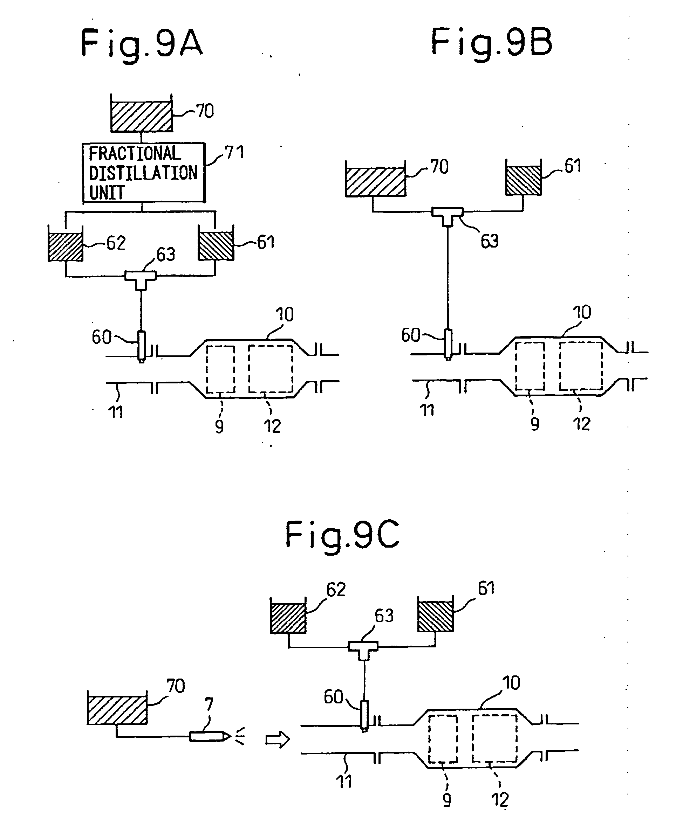

FIG. 9A to FIG. 9C are views showing the state of feed of the reducing agent by the reducing agent feed nozzle 60. In the present invention, the temperature raising control for raising the temperature of the SOx absorbent 9 and the temperature lowering control for lowering temperature of the SOx absorbent 9 will be explained with reference to these drawings. FIG. 9A to FIG. 9C show a fuel tank 70 filled with the fuel of the internal combustion engine 1, that is, gas oil. While not shown in these drawings, the fuel tank 70 is connected to the fuel injectors 7 of the cylinders shown in FIG. 1. The fuel in the fuel tank 70 is injected through the fuel injectors 7 into the individual cylinders.

In FIG. 9A, the fuel tank 70 is connected to a fractional distillation unit 71. The fractional distillation unit 71 is designed to be able to heat part of the fuel in the fuel tank 70 to a predetermined temperature, for example, 300°C or so. The fractional distillation unit 71 is preferably installed in proximity to or in contact With the internal combustion engine 1 or exhaust manifold 8, exhaust pipe 11, etc. Due to this, the heat of the exhaust gas can be utilized to promote the fractional distillation of the fuel.

By heating part of the fuel to the above predetermined temperature, the relatively lighter light fuel in the fuel evaporates. By recovering and cooling the evaporated fuel, the light fuel is liquefied and supplied to the light fuel tank 62. On the other hand, the relatively heavier heavy fuel in the fuel does not evaporate in the fractional distillation unit 71, so it is supplied as is to the heavy fuel tank 61.

As shown, the supply paths extending from the heavy fuel tank 61 and light fuel tank 62 are connected to an adjustment valve 63 connected to the reducing agent feed nozzle 60. The adjustment valve 63 can suitably change the feed ratio of the heavy fuel from the heavy fuel tank 61 and the light fuel from the light fuel tank 62.

In the present invention, when performing temperature raising control for the SOx absorbent 9, the feed ratio of the relatively low reactivity heavy fuel is increased. Due to this, the fuel fed from the reducing agent feed nozzle 60 no longer reacts that much in the upstream side SOx absorbent 9, and the majority of the fuel reaches the downstream side NOx catalyst 12. While the light fuel with the smaller feed ratio than the heavy fuel is used to raise the temperature of the SOx absorbent 9 up to an extent exceeding the S trap rate increasing temperature Ti, the majority of the fuel flows downstream from the SOx absorbent 9, so the temperature of the SOx absorbent 9 is suppressed lower than the S ingredient disassociation temperature Tr.

On the other hand, the fuel reaching the NOx catalyst 12 reacts on the NOx catalyst 12 and raises the temperature of the NOx catalyst 12 to a degree where the SOx absorbed at the NOx catalyst 12 is disassociated. At this time, fuel is fed from the reducing agent feed nozzle 60, so the air-fuel ratio of the exhaust gas shifts to the rich side and SOx is disassociated from the NOx catalyst 12.

Further, when performing a temperature raising control for the SOx absorbent 9, the adjustment valve 63 is used to raise the feed ratio of the relatively high reactivity light fuel. In this case, the high reactivity light fuel reacts in the upstream side SOx absorbent 9. Due to this, the temperature of the SOx absorbent 9 rises. Due to this, the SOx is held in the form of a sulfate. Therefore, the S trap rate of the SOx absorbent 9 is further improved.

FIG. 9B gives another view of the state of feeding of a reducing agent by the reducing agent feed nozzle. In FIG. 9B, the fractional distillation unit 71 is not shown. Instead of the light fuel tank 62, the fuel tank 70 is connected to the adjustment valve 63. That is, in FIG. 9B, the fuel of the fuel tank 70 is used as the relatively high reactivity light fuel. Further, in the case shown in FIG. 9B, the heavy fuel in the heavy fuel tank 61 is prepared separately from .the fuel of the fuel tank 70.

Further, FIG. 9C gives still another view of the state of feed of the reducing agent by the reducing agent feed nozzle. In FIG. 9C as well, the fractional distillation unit 71 is not shown. The heavy fuel in the heavy fuel tank 61 and the light fuel in the light fuel tank 62 are prepared separately in advance from the fuel tank 70. While the details are not explained, even in the case shown in FIG. 9B and FIG. 9C, the feed ratio of the heavy fuel is raised when performing temperature lowering control for the SOx absorbent 9 or the feed ratio of the light fuel is raised when performing temperature raising control for the SOx absorbent 9.

Further, as shown schematically at the left of FIG. 9C, the fuel from the fuel tank 70 may be fed through the fuel injector 7 to the exhaust pipe 11. In this case, instead of feeding light fuel from the light fuel tank 62, the injection conditions of the fuel injector 7 are changed to feed relatively light fuel in the fuel tank 70 as light fuel. Therefore, in this case as well, the fuel injector 7 and adjustment valve 63 can be adjusted so as to change the feed ratio of the heavy fuel and light fuel.

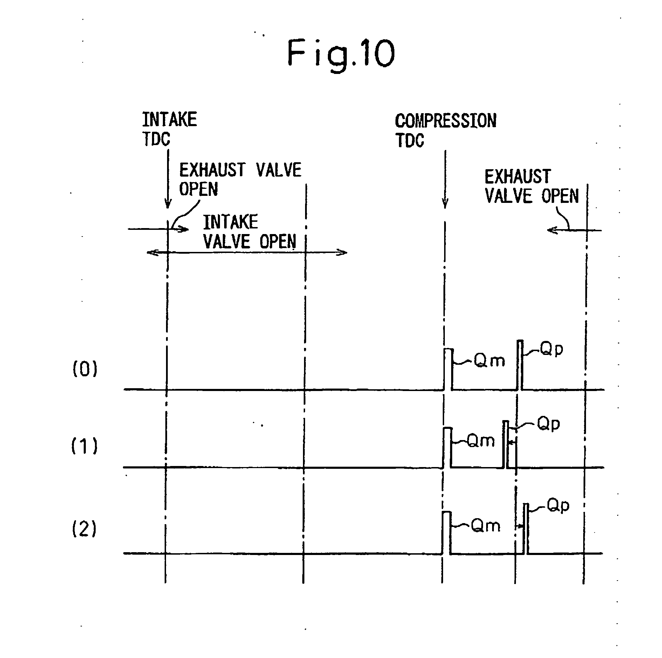

Note that, as shown in FIG. 9C, it is possible to employ post-injection to feed fuel from the fuel injector 7. FIG. 10 is a view for explaining the injection timing. (0) of FIG. 10 shows the normal fuel injection control, where the main injection Qm is performed near the compression TDC (top dead center), then post injection Qp is performed. The fuel injected by the post injection Qp is relatively light, so this fuel reacts on the SOx absorbent 9 and the SOx absorbent 9 is raised in temperature.

Note that when it is desired to make the temperature of the SOx absorbent 9 further rise, as shown in (1) of FIG. 10, the post injection Qp is made to shift to the main injection Qm side, that is, the advanced side. In this case, the time for atomization of the fuel injected by the post injection Qp is secured longer than the case of (0) of FIG. 10. The fuel reaches the SOx absorbent 9 in a relatively easily reactable state. Therefore, the fuel injected by the post injection Qp reacts with the SOx absorbent 9 and, due to this, the temperature of the SOx absorbent 9 is made to rise.

On the other hand, when it is desired to cause the temperature of the SOx absorbent 9 to drop, as shown in (2) of FIG. 10, the post injection Qp is made to shift to the side opposite to the main injection Qm side, that is, the delayed side. In this case, the atomization time is not sufficiently secured, so the fuel reaches the SOx absorbent 9 in the relatively reaction resistant state. Therefore, the fuel injected by the post injection Qp flows into the downstream side NOx catalyst 12 without reacting that much with the SOx absorbent 9. For this reason, in this case, it becomes possible to suppress the temperature of the SOx absorbent 9 relatively low.

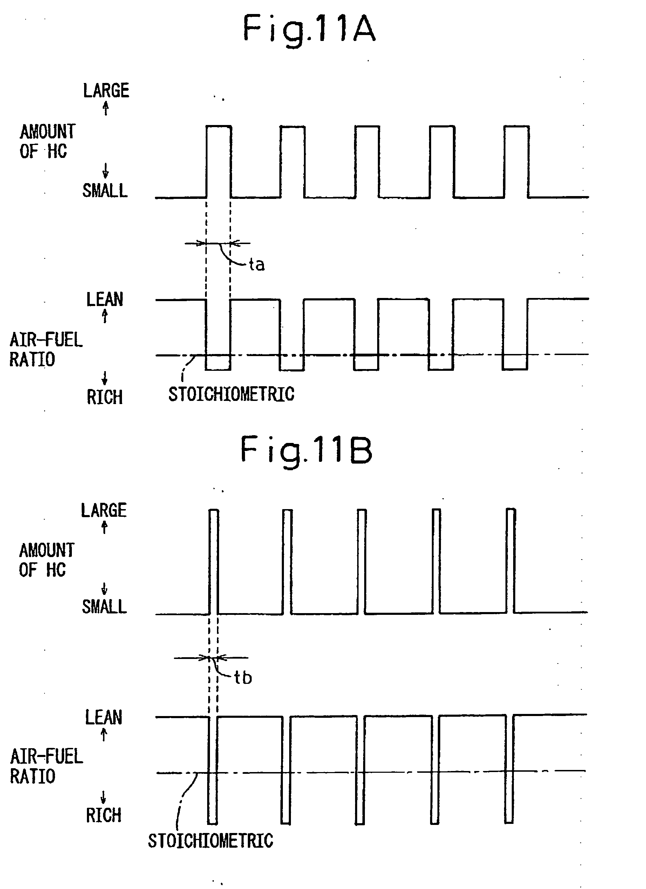

Further, it is possible to employ another method when feeding fuel from a fuel injector 7. FIG. 11A and FIG. 11B are time charts of the amount of HC and air-fuel ratio in the prior art and the present invention, respectively. As shown in FIG. 11A, if HC is fed in a pulse state, the change from the lean to rich state of the air-fuel ratio of the exhaust gas also becomes pulse like. In FIG. 11B, the amount of HC is increased by an injection interval in the same way as the case of FIG. 11A. As illustrated, the HC feed time tb in the case of FIG. 11B is shorter than the HC feed time ta in the case of FIG. 11A. However, in the case of FIG. 11B, the amount of supply of HC is greater than the case of FIG. 11A, so the air-fuel ratio also shifts by exactly that amount to the rich side. When injecting a larger amount of fuel than the normal case in this way, the amount of oxygen in the exhaust passage falls. Therefore, when the fuel injected at this time reaches the SOx absorbent 9, the oxygen required for the reaction is insufficient, so as a result the fuel reaches the NOx catalyst 12 without reacting that much in the SOx absorbent 9 and raises the temperature of the NOx catalyst 12. For this reason, in this case as well, the temperature of the SOx absorbent 9 can be suppressed relatively low.

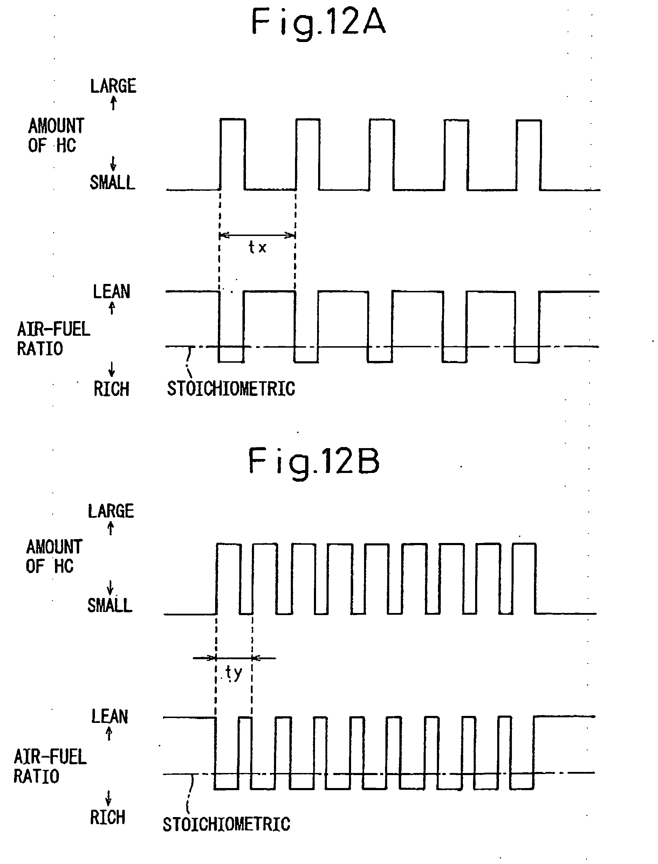

Similarly, FIG. 12A and FIG. 12B are other time charts of the amount of HC and air-fuel ratio in the prior art and the present invention, respectively, while FIG. 11A and FIG. 11B are substantially the same views. As shown in these drawings, the amount of HC fed in a single injection is substantially the same in the case of FIG. 12A and the case of FIG. 12B. However, the injection interval ty shown in FIG. 12B becomes shorter than the injection interval tx in the case of FIG. 12A. Therefore, in this case as well, the oxygen required for the injected fuel to react is insufficient, so for the same reason as explained above, the temperature of the SOx absorbent 9 can be suppressed relatively low.

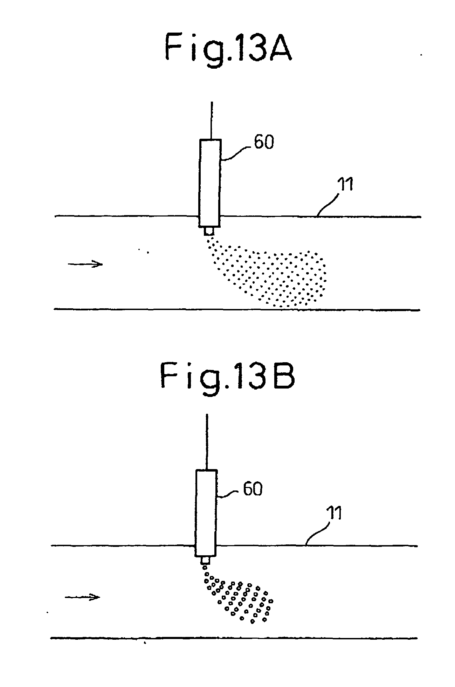

Further, other methods may be employed for the control for raising the temperature and the control for lowering the temperature of the SOx absorbent 9. FIG. 13A and FIG. 13B are views showing the atomization conditions of the reducing agent feed nozzle 60 in the prior art and the present invention, respectively. When it is desired to make the temperature of the SOx absorbent 9 rise, as shown in FIG. 13B, the state of atomization of the fuel injected from the reducing agent feed nozzle 60 is lowered from the case of FIG. 13A. Due to this, the degree of dispersion of the fuel falls and the injected fuel becomes larger in particle size. In this case, when the fuel reaches the SOx absorbent 9, the fuel does not completely atomize and the fuel reaches the NOx catalyst 12 without reacting that much in the SOx absorbent 9. Further, as the fuel can be atomized before reaching the NOx catalyst 12, the fuel reacts on the downstream side NOx catalyst 12 and raises the temperature of the NOx catalyst 12. That is, in this case as well, the temperature of the upstream side SOx absorbent 9 can be kept relatively low.

As the method for reducing the injection conditions of the fuel, the injection pressure of the reducing agent feed nozzle 60 can be lowered from the normal case. Further, it is also possible to employ a variable injection port nozzle able to change the area of the injection port for the reducing agent feed nozzle 60 to inject fuel. In this case, by enlarging the area of the injection ports, it becomes possible to reduce the state of atomization. Further, it is also possible to reduce the state of atomization by reducing the number of injection ports without changing the total opening area of the injection ports.

As opposed to this, when desiring to raise the temperature of the SOx absorbent 9, it is sufficient to make the state of atomization of fuel more even and fine than the normal case shown in FIG. 13A. Due to this, the fuel mainly reacts in the SOx absorbent 9 and due to this the temperature of the SOx absorbent 9 rises. Specifically, it is sufficient to raise the pressure at the time of injection and reduce the areas of the individual injection ports and to increase the number of injection ports without changing the total opening area of the injection ports.

In the present invention, by using these temperature raising and temperature lowering methods alone or in suitable combination, the temperature raising control at step 121 and the temperature lowering control at step 122 are performed. Only naturally, it is also possible to use other methods to raise and lower the temperatures of the SOx absorbent 9.

Referring again to FIG. 5, after the temperature raising control at step 121 and the temperature lowering control at step 122, the routine returns to step 104. Therefore, the processing is repeated until the temperature Ta2 of the SOx absorbent 9 becomes between the S trap rate increasing temperature Ti and the S ingredient disassociation temperature Tr.

When the temperature Ta2 of the SOx absorbent 9 becomes the S trap rate increasing temperature Ti or more, the sulfate ions $SO_4^{2-}$ are relatively unstable sulfate $BaSO_4$ at the surface of the SOx absorbent 9 become the relatively stable sulfate $BaSO_4$. Due to this, the SOx is reliably absorbed at the SOx absorbent 9. As a result, the surface of the SOx absorbent 9 can once again easily absorb SOx and the S trap rate rises.

FIG. 6B is another view of the relationship of the amount of trapping of the sulfur ingredient at the SOx absorbent 9 and time. When the temperature Ta2 of the SOx absorbent 9 is raised to the S trap rate increasing temperature Ti or more and the $BaSO_4$ is stably held, the amount of trappable sulfur is shifted from the initial state X0 to X0'. That is, the S trap rate at the time tz is raised from Rs=Sa/(Sa+Sb) (FIG. 6A) to Rs'=sa'/(sa'+sb')

Next, the routine proceeds to step 107, where the amount of temperature change $\Delta Ta(=Ta2-Ta1)$ of the SOx absorbent 9 and the amount of temperature change $\Delta Tb(=Tb2-Tb1)$ of the NOx catalyst 12 are calculated. Next, at step 108, it is judged if the amount of temperature change ATb of the NOx catalyst 12 is larger than the amount of temperature change $\Delta Ta$ of the SOx absorbent 9. At step 108, if the amount of temperature change $\Delta Tb$ of the NOx catalyst 12 is not larger than the amount of temperature change $\Delta Ta$ of the SOx absorbent 9, the routine proceeds to step 122 where the temperature lowering control of the SOx absorbent 9 is performed. The above processing is repeated until the amount of temperature change $\Delta Tb$ becomes larger than the amount of temperature change $\Delta Ta$.

On the other hand, if it is judged at step 108 that the amount of temperature change ATb of the NOx catalyst 12 is larger than the amount of temperature change $\Delta Ta$ of the SOx absorbent 9, the routine proceeds to step 109. At step 109, the elapsed time te from when the amount of temperature change ΔTb of the NOx catalyst 12 becomes larger than the amount of temperature change ΔTa of the SOx absorbent 9 is obtained. Next, the routine proceeds to step 110, where it is judged if the elapsed time te is the predetermined time t0 or more. Further, when the elapsed time te is the predetermined time t0 or more, the routine proceeds to step 111 where the feed of HC is stopped and the processing is ended. On the other hand, when the elapsed time te is not the predetermined time t0 or more, the routine returns to step 109 and the processing is repeated.

In the above embodiment, the temperature Tb2 of the NOx catalyst 12 is not alluded to, but to make the SOx disassociate from the NOx catalyst 12, it is naturally required that the temperature Tb2 after feed of the reducing agent exceed the S ingredient disassociation temperature Tz for making the S ingredient disassociate from the NOx catalyst 12. The S ingredient disassociation temperature Tz, which is a temperature determined in accordance with the type of the NOx catalyst 12, is preferably lower than the S ingredient disassociation temperature Tr of the SOx absorbent 9. When using such an NOx catalyst 12, the temperature of the SOx absorbent 9 is between the S trap rate increasing temperature Ti and the S ingredient disassociation temperature Tr and the amount of temperature change ΔTa of the SOx absorbent 9 becomes smaller than the amount of temperature change ATb of the NOx catalyst 12. In this case, the possibility of the temperature Tb2 of the NOx catalyst 12 exceeding the S ingredient disassociation temperature Tz becomes higher, therefore, the SOx can be easily released from the NOx catalyst 12. To make the S ingredient disassociation temperature Tr of the SOx absorbent 9 higher than the S ingredient disassociation temperature Tz of the NOx catalyst 12, it is preferable to raise the alkalinity of the SOx absorbent 9 than raising the alkalinity of the NOx catalyst 12. As the combination of SOx absorbent 9 and NOx catalyst 12, for example, a SOx absorbent 9 comprised of a carrier comprised of alumina $Al_2O_3$ and carrying potassium K etc. as a storage agent and a NOx catalyst 12 comprised of a carrier comprised of titanium dioxide $TiO_2$ and carrying barium Ba, lithium Li, etc. as a storage agent may be mentioned. Naturally, it is also possible to use combinations of SOx absorbent 9 and NOx catalyst 12 of other materials.

In this way, in the present invention, as a reducing agent with a relatively low reactivity is supplied, the reducing agent mainly reacts at the downstream side NOx catalyst 12 without reacting that much at the upstream side SOx absorbent 9. Therefore, the temperature of the upstream side SOx absorbent' 9 is relatively low, that is, is held at a temperature between the S trap rate increasing temperature Ti and S ingredient disassociation temperature Tr. Due to this, SOx is held in the SOx absorbent 9 in the form of the relatively stable sulfates and, as explained above, the S trap rate is improved.

On the other hand, at the downstream side NOx catalyst 12, the temperature rises without the reducing agent reacting. Further, the reducing agent is fed, so the air-fuel ratio is shifted to the rich side and the SOx is released from the NOx catalyst. That is, in the present invention, when releasing SOx from the downstream side NOx catalyst 12, as SOx is not released from the upstream side SOx absorbent 9, SOx can be released from the NOx catalyst 12 without the NOx catalyst 12 being poisoned by S.

However, as explained above, in the prior art, for control of suppressing the disassociation of the S ingredient of the upstream side SOx absorbent 9 and for releasing the S ingredient from the downstream side NOx catalyst 12, a bypass passage for bypassing the NOx catalyst and a changeover valve for directing the exhaust gas to one of the NOx catalyst and bypass passage at the branch part of the bypass passage are necessary. As opposed to this, in the present invention, due to the above configuration, there is no need for a bypass passage and changeover valve. A relatively simple configuration can be used for control of suppressing the disassociation of the S ingredient of the upstream side SOx absorbent 9 and for releasing the S ingredient from the downstream side NOx catalyst 12. As a result, the exhaust purification system of the present invention can be easily installed in an automobile etc. where it is difficult to secure space. ,

Although the invention has been shown and described with exemplary embodiments thereof, if should be understood by those skilled in the art that the foregoing and various other changes, omissions and additions may be made therein and thereto without departing from the scope of the invention as defined in the appended claims.

## Claims

1. An exhaust purification system of an internal combustion engine comprising:

   a storage and reducing type NOx catalyst (12) provided in an exhaust passage (11) of the internal combustion engine,
   an SOx absorbent (9) provided at an upstream side of said NOx catalyst (12) and absorbing and trapping the S ingredient,
   a reducing agent feeding means (51) for feeding a reducing agent at an upstream side of the SOx absorbent (9), and
   an S trap rate detecting means for detecting an S trap rate of said SOx absorbent (9) resembling the SOx absorption ability, wherein
   when said S trap rate detected by said S trap rate detecting means is smaller than a predetermined value, the reducing agent is fed by the reducing agent feeding means (51), wherein the temperature of said SOx absorbent (9) after the feeding of said reducing agent is made to become higher than a predetermined S trap rate increasing temperature for raising the S trap rate of said SOx absorbent (9) and is made to become lower than a predetermined S ingredient disassociation temperature for disassociation of the S ingredient from said SOx absorbent (9), wherein the amount of temperature change of said SOx absorbent (9) before and after the feeding of said reducing agent and the amount of temperature change of said NOx catalyst (12) before and after the feeding of said reducing agent is determined and, in case the determined temperature change of the NOx catalyst (12) is greater than the detected temperature change of the SOx absorbent (9), the feeding of the reducing agent is stopped after a predetermined time period (to), thereby making said NOx catalyst (12) high in temperature and thereby making the air-fuel ratio rich so that the SOx stored in said NOx catalyst (12) is released.

2. An exhaust purification system of an internal combustion engine as set forth in claim 1, wherein

said reducing agent feeding means (51) is designed to feed heavy fuel and light fuel, said reducing agent feeding means (51) can change the feed ratio of said heavy fuel and said light fuel, and when releasing SOx from said NOx catalyst (12), the feed ratio of said heavy fuel is increased to make the temperature of said SOx absorbent (9) lower than said S ingredient disassociation temperature.

3. An exhaust purification system of an internal combustion engine as set forth in claim 1 or 2, wherein

said reducing agent feeding means (51) is designed to feed heavy fuel and light fuel, said reducing agent feeding means (51) changes the feed ratio of said heavy fuel and said light fuel, and when releasing SOx from said NOx catalyst (12), the feed ratio of the light fuel is increased to make the temperature of said SOx absorbent (9) higher than said S trap rate increasing temperature.

4. An exhaust purification system of an internal combustion engine as set forth in claim 3, wherein

said reducing agent feeding means (51) is designed to feed the reducing agent by post injection and to feed the reducing agent from the reducing agent injection nozzle provided in said exhaust passage and

the fuel fed from said reducing agent injection nozzle is heavy fuel heavier than the fuel injected by the post injection.

5. An exhaust purification system of an internal combustion engine as set forth in claim 1, wherein

said reducing agent feeding means (51) is a reducing agent injection nozzle provided in said exhaust passage and when releasing SOx from said NOx catalyst (12), at least one action of increasing the amount of fuel injection per injection by said reducing agent injection nozzle and shortening the injection interval by said reducing agent injection nozzle is performed.

**Patentansprüche**

1. Abgasreinigungssystem eines Verbrennungsmotors mit:

einem Speicher- und Reduzier-NOx-Katalysator (12), der in einer Abgaspassage (11) des Verbrennungsmotors vorgesehen ist, einem SOx-Absorbierelement (9), das bei einer stromaufwärtigen Seite des NOx-Katalysators (12) vorgesehen ist und der S-Bestandteil absorbiert und fängt, einer Reduziermittelliefereinrichtung (51) für ein Liefern eines Reduziermittels bei einer stromaufwärtigen Seite des SOx-Absorbierelements (9), und einer S-Fangratenerfassungseinrichtung für ein Erfassen einer S-Fangrate des SOx-Absorbierelements (9), die ähnlich zu der SOx-Absorbtionsfähigkeit ist, wobei wenn die S-Fangrate, die durch die S-Fangratenerfassungseinrichtung erfasst wird, kleiner als ein vorbestimmter Wert ist, das Reduziermittel durch die Reduziermittelliefereinrichtung (51) geliefert wird, wobei bewirkt wird, dass die Temperatur des SOx-Absorbierelements (9) nach dem Liefern des Reduziermittels höher als eine vorbestimmte S-Fangratenerhöhungstemperatur für ein Anheben der S-Fangrate des SOx-Absorbierelements (9) und niedriger als eine vorbestimmte S-Bestandteildissoziationstemperatur für ein Dissoziieren des S-Bestandteils von dem SOx-Absorbierelement (9) wird, wobei der Betrag der Temperaturänderung des SOx-Absorbierelements (9) vor und nach dem Liefern des Reduziermittels und der Betrag der Temperaturänderung des NOx-Katalysators (12) vor und nach dem Liefern des Reduziermittels bestimmt wird, und wobei in dem Fall, dass die bestimmte Temperaturänderung des NOx-Katalysators (12) größer als die erfasste Temperaturänderung des SOx-Absorbierelements (9) ist, das Liefern des Reduziermittels nach einer vorbestimmten Zeitspanne (t0) gestoppt wird, wodurch die Temperatur des NOx-Katalysators (12) hoch gemacht wird, und wodurch das Luft-Kraftstoffverhältnis fett gemacht wird, so dass das SOx, das in dem NOx-Katalysator (12) gespeichert ist, freigesetzt wird.

2. Abgasreinigungssystem eines Verbrennungsmotors gemäß Anspruch 1, wobei

   die Reduziermittelliefereinrichtung (51) entworfen ist, um Schwerkraftstoff und Leichtkraftstoff zu liefern,
   die Reduziermittelliefereinrichtung (51) das Lieferverhältnis von dem Schwerkraftstoff und dem Leichtkraftstoff ändern kann, und wobei
   wenn SOx von dem NOx-Katalysator (12) freigesetzt wird, das Lieferverhältnis des Schwerkraftstoffs erhöht wird, und die Temperatur des SOx-Absorbierelements (9) niedriger als die S-Bestandteildissoziationstemperatur zu machen.

3. Abgasreinigungssystem eines Verbrennungsmotors gemäß Anspruch 1 oder 2, wobei

   die Reduziermittelliefereinrichtung (51) entwickelt ist, um Schwerkraftstoff und Leichtkraftstoff zu liefern,
   die Reduziermittelliefereinrichtung (51) das Lieferverhältnis von dem Schwerkraftstoff und dem Leichtkraftstoff ändert, und wobei
   wenn SOx von dem NOx-Katalysator (12) freigesetzt wird, das Lieferverhältnis des Leichtkraftstoffs erhöht wird, um die Temperatur des SOx-Absorbierelements (9) höher als die S-Fangratenerhöhungstemperatur zu machen.

4. Abgasreinigungssystem eines Verbrennungsmotors gemäß Anspruch 3, wobei die Reduziermittelliefereinrichtung (51) entwickelt ist, um das Reduziermittel durch Nacheinspritzung zu liefern und das Reduziermittel von der Reduziermitteleinspritzdüse zu liefern, die in der Abgaspassage vorgesehen ist, und wobei

   der Kraftstoff, der von der Reduziermitteleinspritzdüse geliefert wird, Schwerkraftstoff ist, der schwerer als der Kraftstoff ist, der durch die Nacheinspritzung eingespritzt wird.

5. Abgasreinigungssystem eines Verbrennungsmotors gemäß Anspruch 1, wobei

die Reduziermittelliefereinrichtung (51) eine Reduziermitteleinspritzdüse ist, die in der Abgaspassage vorgesehen ist, und wobei
wenn SOx von dem NOx-Katalysator (12) freigesetzt wird, wenigstens ein Vorgang von einem Erhöhen der Menge der Kraftstoffeinspritzung pro Einspritzung durch die Reduziermitteleinspritzdüse und einem Verkürzen des Einspritzintervalls durch die Reduziermitteleinspritzdüse durchgeführt wird.

## Revendications

1. Système de purification des gaz d'échappement d'un moteur à combustion interne comprenant :

   un catalyseur de NOx du type à stockage et réduction (12) prévu dans un passage d'échappement (11) du moteur à combustion interne,
   un absorbant de SOx (9) prévu au niveau d'un côté en amont dudit catalyseur de NOx (12) et absorbant et piégeant les ingrédients de soufre,
   un moyen d'alimentation en agent de réduction (51) destiné à délivrer un agent de réduction au niveau d'un côté en amont de l'absorbant de SOx (9), et
   un moyen de détection de taux de piégeage de soufre destiné à détecter un taux de piégeage de soufre dudit absorbant de SOx (9) ressemblant la capacité d'absorption des SOx, dans lequel
   lorsque ledit taux de piégeage de soufre détecté par ledit moyen de détection de taux de piégeage de soufre est inférieur à une valeur prédéterminée, l'agent de réduction est délivré par le moyen d'alimentation en agent de réduction (51), dans lequel la température dudit absorbant de SOx (9) après l'alimentation dudit agent de réduction est amenée à devenir supérieure à une température d'augmentation du taux de piégeage de soufre prédéterminé pour élever le taux de piégeage de soufre dudit absorbant de SOx (9) et est amenée à devenir inférieure à une température de dissociation d'ingrédients de soufre prédéterminée pour la dissociation de l'ingrédient de soufre dudit absorbant de SOx (9), dans lequel la quantité de changement de température dudit absorbant de SOx (9) avant et après l'alimentation dudit agent de réduction et la quantité de changement de température dudit catalyseur de NOx (12) avant et après l'alimentation dudit agent de réduction est déterminée, et dans le cas dans lequel le changement de température déterminé du catalyseur de NOx (12) est supérieur au changement de température détecté de l'absorbant de SOx (9), l'alimentation en agent de réduction est arrêtée après une période de temps prédéterminée ($t_0$), rendant de ce fait la température dudit catalyseur de NOx (12) élevée et rendant de ce fait le rapport air-carburant riche de sorte que les SOx stockés dans ledit catalyseur de NOx (12) sont libérés.

2. Système de purification des gaz d'échappement d'un moteur à combustion interne selon la revendication 1, dans lequel

ledit moyen d'alimentation en agent de réduction (51) est conçu pour délivrer du carburant lourd et du carburant léger,
ledit moyen d'alimentation en agent de réduction (51) peut changer le rapport d'alimentation en dit carburant lourd et en dit carburant léger, et lors de la libération des SOx dudit catalyseur de NOx (12), le rapport d'alimentation en dit carburant lourd est augmenté pour rendre la température dudit absorbant de SOx (9) inférieure à ladite température de dissociation d'ingrédients de soufre.

3. Système de purification des gaz d'échappement d'un moteur à combustion interne selon la revendication 1 ou 2, dans lequel

ledit moyen d'alimentation en agent de réduction (51) est conçu pour délivrer du carburant lourd et du carburant léger,
ledit moyen d'alimentation en agent de réduction (51) change le rapport d'alimentation en dit carburant lourd et en dit carburant léger, et lors de la libération des SOx du catalyseur de NOx (12), le rapport d'alimentation en carburant léger est augmenté pour rendre la température dudit absorbant de SOx (9) supérieure à ladite température d'augmentation du taux de piégeage de soufre.

4. Système de purification des gaz d'échappement d'un moteur à combustion interne selon la revendication 3, dans lequel

ledit moyen d'alimentation en agent de réduction (51) est conçu pour délivrer l'agent de réduction par post-injection et pour délivrer l'agent de réduction depuis la buse d'injection d'agent de réduction prévue dans ledit passage d'échappement, et
le carburant délivré depuis ladite buse d'injection d'agent de réduction est du carburant lourd plus lourd que le carburant injecté par la post-injection.

5. Système de purification des gaz d'échappement d'un moteur à combustion interne selon la revendication 1, dans lequel

ledit moyen d'alimentation en agent de réduction (51) est une buse d'injection d'agent de réduction prévue dans ledit passage d'échappement et
lors de la libération des SOx dudit catalyseur de NOx (12), au moins une action consistant à augmenter la quantité d'injection de carburant par injection par ladite buse d'injection d'agent de réduction et à raccourcir l'intervalle d'injection par ladite buse d'injection d'agent de réduction est exécutée.

# Fig.1

# Fig.2

# Fig.3

# Fig.4A

# Fig.4B

# Fig.5

START

101
100

Rs < Rs0 ? — NO

YES

ACQUIRE Ta1, Tb1 — 102

START FEED OF HC — 103

121

CONTROL TO RAISE TEMPERATURE OF SOx ABSORBENT

ACQUIRE Ta2, Tb2 — 104

105

122

CONTROL TO LOWER TEMPERATURE OF SOx ABSORBENT

$Ti \leqq Ta2$ ? — NO

YES

106

$Ta2 \leqq Tr$ ? — NO

YES

$\triangle Ta = Ta2 - Ta1$
$\triangle Tb = Tb2 - Tb1$ — 107

108

$\triangle Tb > \triangle Ta$ ? — NO

YES

109

ACQUIRE ELAPSED TIME te AFTER RAISING TEMPERATURE

110

$te \geqq t0$ ? — NO

YES

STOP FEED OF HC — 111

END

# Fig.6A

# Fig.6B

# Fig.7

# Fig.8

# Fig.9A

# Fig.9B

# Fig.9C

# Fig.10

INTAKE TDC

EXHAUST VALVE OPEN

INTAKE VALVE OPEN

COMPRESSION TDC

EXHAUST VALVE OPEN

(0) — Qm — Qp

(1) — Qm — Qp

(2) — Qm — Qp

# Fig.11A

# Fig.11B

# Fig.12A

# Fig.12B

24

# Fig.13A

# Fig.13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000145436 A

- JP 06173652 A